# EUROPEAN PATENT APPLICATION

(11) **EP 4 624 774 A1**
(43) Date of publication of application: **01.10.2025**
(21) Application number: 23910387.2
(22) Date of filing: 22.12.2023
(51) Int. Cl.: F16C 11/04, G06F 1/16, H04M 1/02

(54) **ROTATING SHAFT ASSEMBLY AND FOLDABLE SCREEN DEVICE**

(30) Priority: 28.12.2022 CN 202223534067 U
(71) Applicant: Huawei Technologies Co., Ltd., Shenzhen, Guangdong 518129 (CN)
(72) Inventor: DING, Ao, Shenzhen, Guangdong 518129 (CN); LIU, Guoqiang, Shenzhen, Guangdong 518129 (CN); QIN, Yuan, Shenzhen, Guangdong 518129 (CN); SU, Zhaoliang, Shenzhen, Guangdong 518129 (CN)
(74) Representative: MERH-IP Matias Erny Reichl Hoffmann Patentanwälte PartG mbB
(86) International application number: PCT/CN2023/140963
(87) International publication number: WO 2024/140461

(57) **Abstract**

This application provides a hinge assembly and a foldable display device. The hinge assembly includes a hinge and at least two support structures that are rotatably connected to the hinge and located on two sides of the hinge. At least one of the support structures includes a resin matrix and at least one metal part embedded in the resin matrix. The hinge assembly in this application has high support strength, a light weight, and low costs, and can provide flatness and rigidity for a screen of the foldable display device, thereby facilitating lightweight of the foldable display device.

## Description

### CROSS-REFERENCE TO RELATED APPLICATIONS

This application claims priority to Chinese Patent Application No. 202223534067.2, filed with the China National Intellectual Property Administration on December 28, 2022 and entitled "HINGE ASSEMBLY AND FOLDABLE DISPLAY DEVICE", which is incorporated herein by reference in its entirety.

### TECHNICAL FIELD

This application relates to the field of communication device technologies, and in particular, to a hinge assembly and a foldable display device in which the hinge assembly is used.

### BACKGROUND

With rapid development of consumer electronic products (such as mobile phones, tablet computers, and computers), consumers have higher requirements for the electronic products. In addition to performance requirements for the electronic products, the consumers are increasingly pursuing large-screen designs that provide better viewing experience and are more convenient to carry. Therefore, foldable display mobile terminals are gradually coming into public view.

An existing foldable display mobile terminal (for example, a foldable display mobile phone) generally includes a housing and a flexible display attached to an upper surface of the housing. The housing includes a first housing and a second housing that are connected via a hinge assembly. Existing hinge assemblies are mostly made of stainless steel and are heavy, which is not conducive to lightweight of foldable display mobile terminals.

### SUMMARY

In view of this, to resolve at least one of the foregoing defects, embodiments of this application provide a hinge assembly and a foldable display device in which the hinge assembly is used. The hinge assembly has high support strength, a light weight, and low costs, and can provide flatness and rigidity for a screen of the foldable display device, thereby facilitating lightweight of the foldable display device.

A first aspect of embodiments of this application provides a hinge assembly, used in a foldable display device. The hinge assembly includes a hinge and at least two support structures that are rotatably connected to the hinge and located on two sides of the hinge. At least one of the support structures includes a resin matrix and at least one metal part embedded in the resin matrix.

The at least two support structures are disposed on the two sides of the hinge, so that flatness and rigidity can be provided for a screen of the foldable display device. The support structure is formed by embedding the at least one metal part in the resin matrix. Compared with a solution of using a resin material alone, this solution can significantly improve support strength of the support structure, and provide better extrusion resistance for the support structure. Compared with a solution of using a pure metal material, this solution can significantly reduce a weight and costs of the support structure, so that the hinge assembly can have advantages such as high support strength, a light weight, and low costs.

With reference to the first aspect, in some possible implementations, each metal part is fully embedded in the resin matrix.

Each metal part is fully embedded in the resin matrix, that is, the metal part is fully wrapped by the resin matrix, so that surface flatness of the support structure can be further improved.

With reference to the first aspect, in some possible implementations, at least one surface of the at least one metal part is exposed from the resin matrix.

The resin matrix partially wraps the metal part, so that integration of the support structure and support strength can be ensured and a quantity of used resin materials can be reduced, to further reduce a thickness and a weight of the support structure.

With reference to the first aspect, in some possible implementations, the support structure includes one metal part, a length direction of the metal part is consistent with a length direction of the resin matrix, and a length of the metal part is at least one half of a length of the resin matrix.

A longer metal part is embedded in the resin matrix, to ensure that the support structure has sufficient support strength, and further improve thickness consistency and surface flatness of the support structure. In addition, the longer metal part is embedded to facilitate forming of the support structure as well as subsequent mounting and fastening of the screen of the foldable display device.

With reference to the first aspect, in some possible implementations, the support structure includes a plurality of metal parts, and the plurality of metal parts are spaced apart from each other in a length direction of the resin matrix.

The plurality of metal parts are spaced apart from each other in the length direction of the resin matrix, so that support strength of the support structure can be further improved, surface flatness of the support structure can be ensured, and a weight of the support structure can be further reduced.

With reference to the first aspect, in some possible implementations, a thickness of the support structure ranges from 0.1 mm to 5 mm, and further ranges from 0.5 mm to 3 mm. For example, the thickness of the support structure may be 0.1 mm, 0.2 mm, 0.3 mm, 0.4 mm, 0.5 mm, 0.6 mm, 0.7 mm, 0.8 mm, 0.9 mm, 1 mm, 1.5 mm, 2 mm, 2.5 mm, 3 mm, 3.5 mm, 4 mm, 4.5 mm, 5 mm, or the like.

The thickness of the support structure is set to be within the foregoing range, so that flatness and rigidity can be significantly provided for the screen of the foldable display device, and a thickness of the entire hinge assembly is also significantly reduced. This facilitates lightness and thinning of the foldable display device.

With reference to the first aspect, in some possible implementations, the support structure is an integrated structure formed through in-mold injection molding.

The resin matrix may be wrapped on a surface of the metal part through in-mold injection molding, to obtain a support structure of an integrated structure. This further improves a force of bonding between the resin matrix and the metal part.

With reference to the first aspect, in some possible implementations, a plurality of pits are provided on a surface of the metal part located in the resin matrix, and the resin matrix extends into the pits.

The plurality of pits are formed on the surface of the metal part, so that a force of bonding between the resin matrix and the metal part can be improved, and layering between the resin matrix and the metal part under an external force can be reduced, to further improve support strength of the support structure.

With reference to the first aspect, in some possible implementations, a material of the metal part is aluminum, copper, gold, nickel, iron, or steel.

The metal part made of the foregoing metal material has high strength and low costs, which helps improve support strength of the support structure and reduce costs of the hinge assembly.

With reference to the first aspect, in some possible implementations, a material of the resin matrix is polyetheretherketone, nylon, polytetrafluoroethylene, polyphenylene sulfide, or polyimide.

The resin matrix made of the foregoing material has high strength, a light weight, and low costs, which helps improve support strength of the support structure and reduce a weight and costs of the hinge assembly.

With reference to the first aspect, in some possible implementations, a plurality of fibers are distributed in the resin matrix, and the fiber is a carbon fiber, a glass fiber, a ceramic fiber, a PBO fiber, or a Kevlar fiber.

The plurality of fibers are distributed in the resin matrix, so that tensile strength of the resin matrix can be improved.

A second aspect of embodiments of this application provides a foldable display device. The foldable display device includes a hinge assembly and a first structural part and a second structural part that are rotatably connected to the hinge assembly. The hinge assembly is the hinge assembly according to the first aspect of embodiments of this application. The first structural part and the second structural part are separately rotatably connected to the hinge via the support structure.

The hinge assembly according to the first aspect of embodiments of this application is used, so that high flatness, support, and rigidity can be provided for a screen of the foldable display device, and a weight and costs of the foldable display device can be reduced.

### BRIEF DESCRIPTION OF DRAWINGS

FIG. 1 is a diagram of a structure of a foldable display device according to an embodiment of this application;
FIG. 2 is a diagram of a structure of a support structure according to an embodiment of this application, where a single surface of an entire metal part is exposed from a resin matrix;
FIG. 3 is a diagram of a structure of a support structure according to another embodiment of this application, where a single surface of each of three metal parts is exposed from a resin matrix;
FIG. 4 is a diagram of a structure of a support structure according to still another embodiment of this application, where two surfaces of an entire metal part are exposed from a resin matrix;
FIG. 5 is a diagram of a structure of a support structure according to still another embodiment of this application, where two surfaces of each of three metal parts are exposed from a resin matrix;
FIG. 6 is a diagram of a structure of a support structure according to still another embodiment of this application, where three surfaces of an entire metal part are exposed from a resin matrix;
FIG. 7 is a diagram of a structure of a support structure according to still another embodiment of this application, where three surfaces of each of three metal parts are exposed from a resin matrix;
FIG. 8 is a diagram of a structure of a support structure according to still another embodiment of this application, where four surfaces of an entire metal part are exposed from a resin matrix;
FIG. 9 is a diagram of a structure of a support structure according to still another embodiment of this application, where four surfaces of each of three metal parts are exposed from a resin matrix;
FIG. 10 is a diagram of a structure of a support structure according to still another embodiment of this application, where five surfaces of an entire metal part are exposed from a resin matrix;
FIG. 11 is a diagram of a structure of a support structure according to still another embodiment of this application, where five surfaces of each of three metal parts are exposed from a resin matrix;
FIG. 12 is a diagram of a structure of a support structure according to still another embodiment of this application, where an entire metal part is fully embedded in a resin matrix;
FIG. 13 is a diagram of a structure of a support structure according to still another embodiment of this application, where three metal parts are fully embedded in a resin matrix;
FIG. 14 is a diagram of a structure of a support structure according to still another embodiment of this application, where a pit is formed on a metal part; and
FIG. 15 is a diagram of a structure of a support structure according to still another embodiment of this application, where fibers are distributed in a resin matrix.

### Description of reference numerals of main components

| | |
|---|---|
| Foldable display device | 100 |
| Hinge assembly | 10 |
| Hinge | 1 |
| Support structure | 3 |
| Resin matrix | 32 |
| Metal part | 34 |
| Pit | 36 |
| Fiber | 38 |
| First structural part | 30 |
| Second structural part | 50 |

### DESCRIPTION OF EMBODIMENTS

The following describes embodiments of this application with reference to the accompanying drawings in embodiments of this application.

The terms used in the following embodiments are merely intended to describe particular embodiments, but are not intended to limit this application. The terms "one", "a", "the", "the foregoing", and "this" of singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", and "have", and variants thereof all mean "include but are not limited to", unless otherwise specifically emphasized in another manner.

Hinge assemblies in existing foldable display devices are mostly made of stainless steel and are heavy, which is not conducive to lightweight of the foldable display devices.

Therefore, an embodiment of this application provides a hinge assembly with high support strength, a light weight, and low costs. The hinge assembly may be used in a foldable display device, but is not limited thereto. The foldable display device includes but is not limited to a terminal device like a mobile phone, a tablet computer, or a computer. The hinge assembly may provide high support strength and flatness for a flexible display of the foldable display device, and help reduce costs of the foldable display device and implement lightweight of the foldable display device.

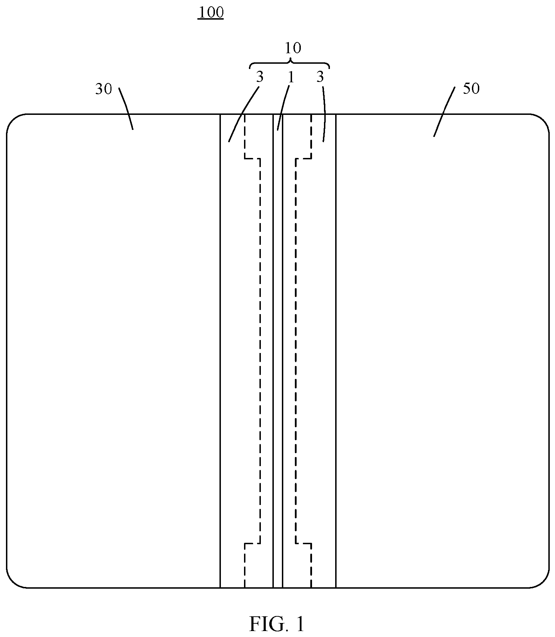

As shown in FIG. 1, the foldable display device 100 provided in this embodiment of this application includes a hinge assembly 10 and a first structural part 30 and a second structural part 50 that are rotatably connected to the hinge assembly 10. The first structural part 30 and the second structural part 50 are usually flexible displays. The hinge assembly 10 includes a hinge 1 and at least two support structures 3 that are rotatably connected to the hinge 1 and located on two sides of the hinge 1, where at least one of the support structures 3 includes a resin matrix 32 and at least one metal part 34 embedded in the resin matrix 32. The first structural part 30 and the second structural part 50 are separately rotatably connected to the hinge 1 via the support structure 3.

In some embodiments, the hinge assembly 10 includes the two support structures 3 located on the two sides of the hinge 1, and the two support structures 3 are respectively connected to the first structural part 30 and the second structural part 50.

A support structure (also referred to as a "door panel") in a conventional hinge assembly is usually made of stainless steel, and can provide sufficient strength support for a flexible plane. However, density of the stainless steel is as high as 7.9 g/cm³, and the stainless steel is heavy, which cannot implement lightweight of the foldable display device. A door panel made of a fiber material such as carbon fiber or glass fiber is also used. Despite a light weight, this type of fiber material has high costs and low strength, making it difficult to provide effective support for a flexible display. Therefore, this embodiment of this application provides the support structures 3. The resin matrix 32 is used as a continuous phase of the support structure 3, and the metal part 34 is embedded in the resin matrix 32. The embedded metal part 34 can significantly improve support strength of the support structure 3, and provide better extrusion resistance for the support structure 3. In addition, compared with a pure metal material, the resin matrix can reduce a quantity of used metal, and significantly reduce a weight and costs of the support structure 3, so that the hinge assembly 10 can have advantages such as high support strength, a light weight, and low costs. Therefore, high support strength can be provided for the first structural part 30 and the second structural part 50 of the foldable display device 100, and flatness of the first structural part 30 and the second structural part 50 is improved.

For the support structure 3, based on an actual requirement, all surfaces of the metal part 34 may be wrapped by the resin matrix 32; or some surfaces of the metal part 34 may be wrapped by the resin matrix 32, and some surfaces are exposed from the resin matrix 32.

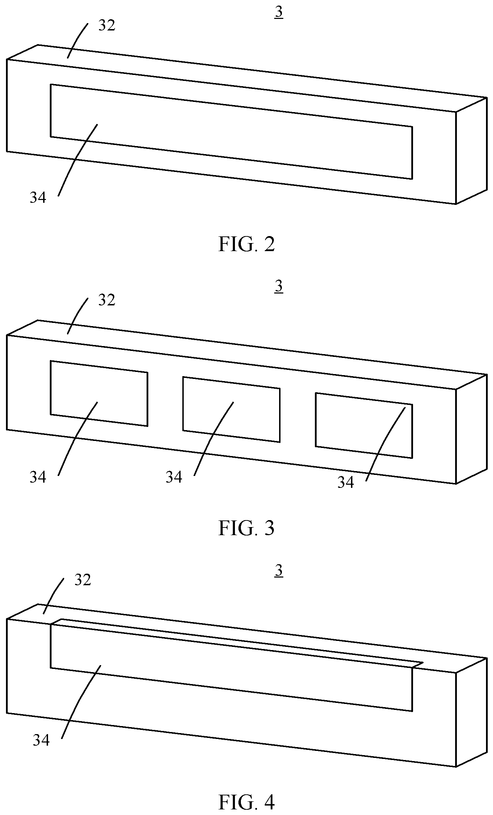

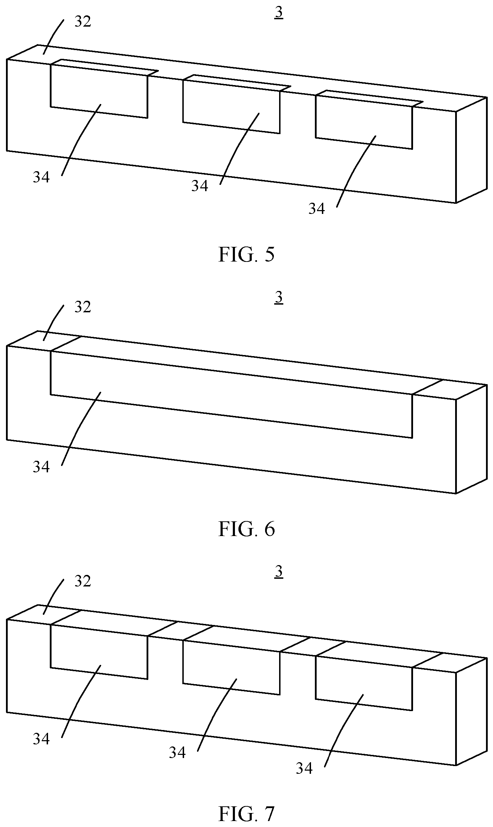

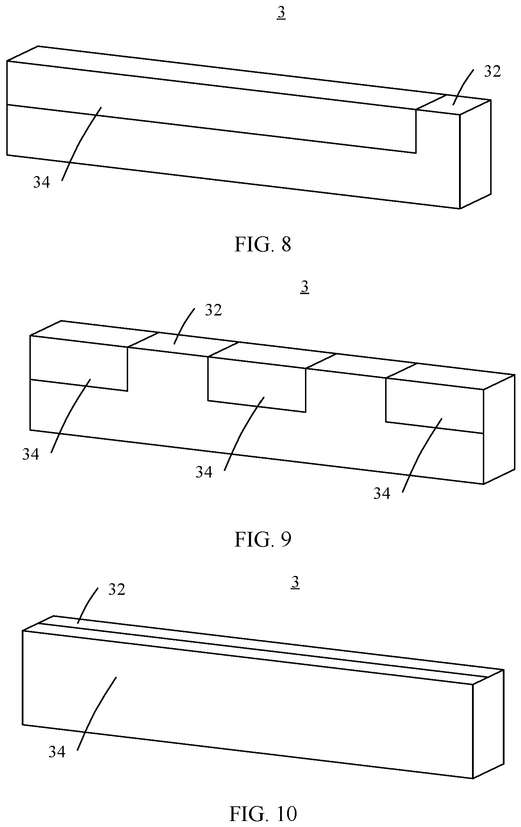

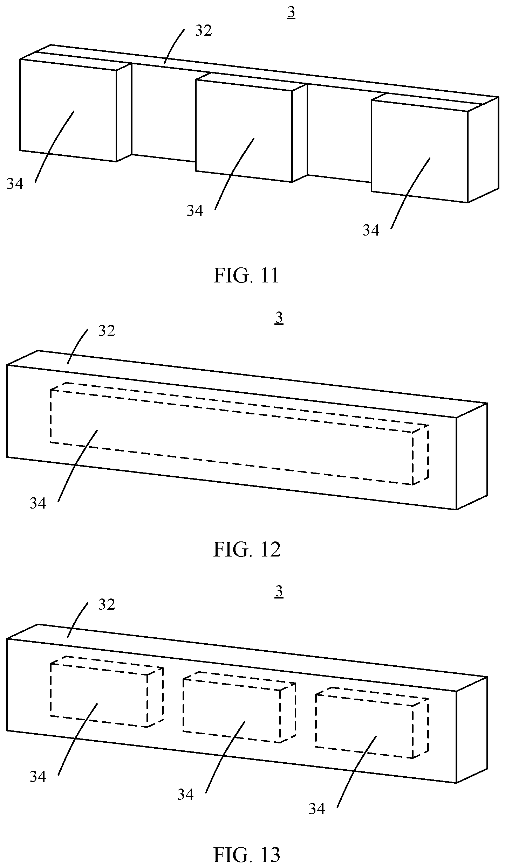

As shown in FIG. 4 to FIG. 11, in some embodiments, at least one surface of the at least one metal part 34 is exposed from the resin matrix 32, that is, some surfaces of the at least one metal part 34 is wrapped by the resin matrix 32. The resin matrix 32 partially wraps the metal part 34, so that integration of the support structure 3 and support strength can be ensured and a quantity of used resin materials can be reduced, to further reduce a thickness and a weight of the support structure 3. This facilitates lightness and thinning of the hinge assembly 10. As shown in FIG. 12 and FIG. 13, in other embodiments, each metal part 34 is fully embedded in the resin matrix 32. Each metal part 34 is fully embedded in the resin matrix 32, that is, the metal part 34 is fully wrapped by the resin matrix 32, so that surface flatness and strength of the support structure 3 can be further improved. As shown in FIG. 12, in the resin matrix 32, there may be one metal part 34, and the metal part 34 is fully embedded in the resin matrix 32. This ensures that the support structure 3 has sufficient support strength, and further improves thickness consistency and surface flatness of the support structure 3. In addition, one metal part 34 is embedded to facilitate forming of the support structure 3 as well as mounting and fastening of the first structural part 30 and the second structural part 50 in the foldable display device 100.

As shown in FIG. 2, FIG. 4, FIG. 6, FIG. 8, and FIG. 10, in the resin matrix 32, there may be one metal part 34, and some surfaces of the metal part 34 may be embedded in the resin matrix 32, where one to five surfaces may be exposed from the resin matrix 32.

In some embodiments, when there is one metal part 34, a length direction of the metal part 34 is consistent with a length direction of the resin matrix 32, and a length of the metal part 34 is at least one half of a length of the resin matrix 32. A longer metal part 34 is embedded in the resin matrix 32, to ensure that the support structure 33 has sufficient support strength, and further improve thickness consistency and surface flatness of the support structure.

As shown in FIG. 3, FIG. 5, FIG. 7, FIG. 9, FIG. 11, and FIG. 13, the support structure 3 includes a plurality of metal parts 34, and the plurality of metal parts 34 are spaced apart from each other in the length direction of the resin matrix 32. The plurality of metal parts 34 are spaced apart from each other in the length direction of the resin matrix 32, so that support strength of the support structure 3 can be further improved, surface flatness of the support structure 3 can be ensured, and a weight of the support structure 3 can be further reduced.

In some embodiments, a thickness of the support structure 3 ranges from 0.1 mm to 5 mm, and further ranges from 0.5 mm to 3 mm. For example, the thickness of the support structure may be 0.1 mm, 0.2 mm, 0.3 mm, 0.4 mm, 0.5 mm, 0.6 mm, 0.7 mm, 0.8 mm, 0.9 mm, 1 mm, 1.5 mm, 2 mm, 2.5 mm, 3 mm, 3.5 mm, 4 mm, 4.5 mm, 5 mm, or the like. The thickness of the support structure 3 is set to be within the foregoing range, so that flatness and rigidity can be significantly provided for the first structural part 30 and the second structural part 50 of the foldable display device 100, and a thickness of the entire hinge assembly is also significantly reduced. This facilitates lightness and thinning of the foldable display device.

In some embodiments, the support structure 3 is an integrated structure formed through in-mold injection molding. To be specific, resin is mold injected into a cavity in which the metal part 34 is placed through in-mold injection molding, and the resin is cured to form the resin matrix 32. In this case, the resin matrix 32 wraps some or all surfaces of the metal part 34, so that the support structure 3 with an integrated structure can be obtained. In the support structure 3 with an integrated structure obtained by using an in-mold injection molding process, the resin matrix 32 and the metal part 34 have a stronger bonding force and higher thickness uniformity.

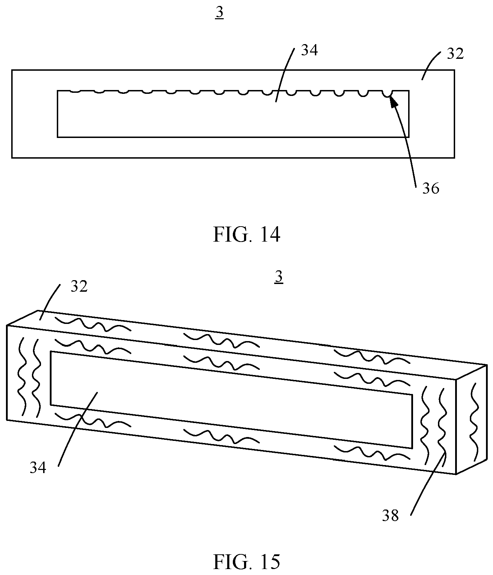

In some embodiments, as shown in FIG. 14, a plurality of pits 36 are provided on a surface of the metal part 34 located in the resin matrix 32, and the resin matrix 32 extends into the pits 36. The plurality of pits 36 are formed on the surface of the metal part 34, so that a force of bonding between the resin matrix 323 and the metal part 34 can be improved, and layering between the resin matrix 32 and the metal part 34 under an external force can be reduced, to further improve support strength of the support structure 3.

In some embodiments, a material of the metal part 34 is aluminum, copper, gold, nickel, iron, or steel. The metal part 34 made of the foregoing metal material has high strength and low costs, which helps improve support strength of the support structure 3 and reduce costs of the hinge assembly 10.

In some embodiments, a material of the resin matrix 32 is a special engineering plastic polyetheretherketone (PEEK), nylon (PA), polytetrafluoroethylene (PTFE), polyphenylene sulfide (PPS), polyimide (PI), or the like. The resin matrix made of the foregoing material has high strength, a light weight, and low costs, which helps improve support strength of the support structure 3 and reduce a weight and costs of the hinge assembly 10.

In some embodiments, as shown in FIG. 15, a plurality of fibers 38 are distributed in the resin matrix 32, and the fiber is a fiber with high tensile strength, such as a carbon fiber, a glass fiber, a ceramic fiber, a PBO fiber, or a Kevlar fiber. The fiber 38 may account for 20 wt% to 50 wt% of a total weight of the resin matrix 32 and the fiber 38, for example, may be 20 wt%, 25 wt%, 30 wt%, 35 wt%, 40 wt%, 45 wt%, or 50 wt%. The plurality of fibers 38 are distributed in the resin matrix 32, so that tensile strength of the resin matrix 32 can be improved. The fibers 38 may be distributed in the resin matrix 32 in an orderly manner or in a disorderly manner.

In an actual application of the hinge assembly 10, a metal part 34 may be disposed at a structurally weak position of the support structure 3 or a position subject to greater stress. For example, if a part that is of the support structure 3 and that is close to the hinge 1 is subject to large stress, the metal part 34 may be embedded in the resin matrix 32 that is close to the hinge 1. For another example, if a part that is of the support structure 3 and that is connected to the first structural part 30 or the second structural part 50 bears large stress, the metal part 34 may be embedded in the resin matrix 32 at the position. A position at which the metal part 34 is embedded is arranged according to an actual application, so that support strength of the support structure 3 can be improved, and a weight and costs of the support structure 3 can be reduced to a maximum extent. In addition, the in-mold injection molding process may be used to flexibly adjust an embedded position of the metal part 34, thereby improving design flexibility of the support structure 3.

The hinge assembly 10 is used, and the support structure 3 has high support strength, a small weight, and low costs, so that high flatness, support, and rigidity can be provided for the first structural part 30 and the second structural part 50 of the foldable display device 100, and a weight and costs of the foldable display device 100 can be reduced.

The following further describes the technical solutions in embodiments of this application by using specific embodiments.

### Embodiment 1

Main method and process for preparing a support structure in which a single surface of an entire embedded metal part is exposed are as follows:
Step 1: Select a copper sheet as a metal part, and prepare a specific shape of an entire metal part by using a plurality of processes such as bending and CNC.
Step 2: Half-wrap the copper sheet by injection molding PA, and obtain a support structure (shown in FIG. 2) through thermal forming, to expose one surface of the copper sheet from a resin matrix, in which an overall thickness of the support structure is 0.5 mm.

The support structure prepared in this embodiment is used in a foldable display device, so that the support structure can provide sufficient strength, flatness, and rigidity for a screen of the foldable display device, and well implement lightweight of the foldable display device.

### Embodiment 2

Main method and process for preparing a support structure in which an entire metal part is fully wrapped are as follows:
Step 1: Select a copper sheet as a metal part, and prepare a specific shape of an entire metal part by using a plurality of processes such as bending and CNC.
Step 2: Fully wrap the entire copper sheet by injection molding PA, and obtain a support structure (shown in FIG. 12) through thermal forming, where the copper sheet is fully embedded in a resin matrix, and an overall thickness of the support structure is 0.5 mm.

Compared with Embodiment 1, in this embodiment, the metal part is fully wrapped, so that support strength is sufficient and surface flatness of the support structure is higher.

### Embodiment 3

Main method and process for preparing a support structure in which three metal parts are fully wrapped are as follows:
Step 1: Select copper sheets as metal inserts, and prepare specific shapes of three metal parts by using a plurality of processes such as bending and CNC.
Step 2: Fully wrap the three copper sheets by injection molding PA, and obtain a support structure (shown in FIG. 13) through thermal forming, where the three copper sheets are spaced apart from each other and fully embedded in a resin matrix, and an overall thickness of the support structure is 0.5 mm.

Compared with Embodiment 2, this embodiment further shortens a length of the metal part and further reduces a weight of the support structure while ensuring support strength and surface flatness of the support structure.

### Embodiment 4

Main method and process for preparing a support structure in which a single surface of an entire embedded metal part is exposed are as follows:
Step 1: Select a steel sheet as a metal part, and prepare a specific shape of an entire metal part by using a plurality of processes such as bending and CNC.
Step 2: Half-wrap the steel sheet by injection molding PA, and obtain a support structure through thermal forming, to expose one surface of the steel sheet from a PA matrix, in which an overall thickness of the support structure is 0.5 mm.

Compared with Embodiment 1, in this embodiment, a material of the metal part is changed from a copper sheet material to a steel sheet material, to improve strength of the metal part, so that strength of the entire support structure may be further improved.

### Embodiment 5

Main method and process for preparing a support structure in which a single surface of an entire embedded metal part is exposed are as follows:
Step 1: Select a copper sheet as a metal part, and prepare a specific shape of an entire metal part by using a plurality of processes such as bending and CNC.
Step 2: Half-wrap the copper sheet by injection molding PEEK, and obtain a support structure through thermal forming, to expose one surface of the copper sheet from a resin matrix, in which an overall thickness of the support structure is 0.5 mm.

Compared with Embodiment 1, in this embodiment, a material of a resin is changed from PA to PEEK. Because strength of the PEEK material is higher than that of the PA, strength of the support structure can be further improved.

### Embodiment 6

Main method and process for preparing a support structure in which a single surface of an entire embedded metal part is exposed are as follows:
Step 1: Select a copper sheet as a metal part, and prepare a specific shape of an entire metal part by using a plurality of processes such as bending and CNC.
Step 2: Perform T-treatment on the copper sheet to form nano-pits on a surface, so that a force of bonding between the copper sheet and a resin material is improved.
Step 3: Half-wrap the surface-treated copper sheet by injection molding PEEK, and obtain a support structure through thermal forming, to expose one surface of the copper sheet from a resin matrix, in which an overall thickness of the support structure is 0.5 mm.

Compared with Embodiment 1, in this embodiment, a nano molding technology is used, so that a force of bonding between the metal part and the resin material is improved.

### Embodiment 7

Main method and process for preparing a support structure in which a single surface of an entire embedded metal part is exposed are as follows:
Step 1: Select a copper sheet as a metal part, and prepare a specific shape of an entire metal part by using a plurality of processes such as bending and CNC.
Step 2: Half-wrap the copper sheet by injection molding PA including 20% glass fibers, and obtain a support structure through thermal forming, to expose one surface of the copper sheet from a resin matrix, in which an overall thickness of the support structure is 0.5 mm.

Compared with Embodiment 1, in this embodiment, 20% glass fibers are added to a resin material PA, so that tensile strength and tensile modulus of the support structure are improved, and strength of the support structure is further improved.

### Embodiment 8

Main method and process for preparing a support structure in which a single surface of an entire embedded metal part is exposed are as follows:
Step 1: Select a copper sheet as a metal part, and prepare a specific shape of an entire metal part by using a plurality of processes such as bending and CNC.
Step 2: Half-wrap the copper sheet by injection molding PA, and obtain a support structure through thermal forming, to expose one surface of the copper sheet from a resin matrix, in which an overall thickness of the support structure is 0.7 mm.

Compared with Embodiment 1, in this embodiment, the thickness of the support structure is increased from 0.5 mm to 0.7 mm, so that strength of the entire support structure may be further improved.

### Embodiment 9

Main method and process for preparing a support structure in which a single surface of an entire embedded metal part is exposed are as follows:
Step 1: Select a steel sheet as a metal part, and prepare a specific shape of an entire metal part by using a plurality of processes such as bending and CNC.
Step 2: Half-wrap the steel sheet by injection molding PA including 40% glass fibers, and obtain a support structure through thermal forming, to expose one surface of the steel sheet from a resin matrix, in which an overall thickness of the support structure is 0.5 mm.

Compared with Embodiment 1, in this embodiment, the steel sheet is selected as the metal part, and the injection-molded resin material is the PA including 40% glass fibers, so that tensile strength and tensile modulus of the support structure are improved, and strength of the support structure is further improved.

### Embodiment 10

Main method and process for preparing a support structure in which a single surface of an entire embedded metal part is exposed are as follows:
Step 1: Select a steel sheet as a metal part, and prepare a specific shape of an entire metal part by using a plurality of processes such as bending and CNC.
Step 2: Perform T-treatment on the steel sheet to form nano-pits on a surface, so that a force of bonding between the steel sheet and a resin material is improved.
Step 3: Half-wrap the steel sheet by injection molding PA including 40% glass fibers, and obtain a support structure through thermal forming, to expose one surface of the steel sheet from a resin matrix, in which an overall thickness of the support structure is 0.5 mm.

Compared with Embodiment 9, in this embodiment, a nano molding technology is used, so that a force of bonding between the metal part and the resin material is further improved.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Implementations of this application or features in the implementations may be combined with each other if there is no conflict. Therefore, the protection scope of this application shall be subject to the protection scope of the claims.

## Claims

1. A hinge assembly, used in a foldable display device, wherein the hinge assembly comprises a hinge and at least two support structures that are rotatably connected to the hinge and located on two sides of the hinge, and at least one of the support structures comprises a resin matrix and at least one metal part embedded in the resin matrix.

2. The hinge assembly according to claim 1, wherein the at least one metal part is fully embedded in the resin matrix.

3. The hinge assembly according to claim 1, wherein at least one surface of the at least one metal part is exposed from the resin matrix.

4. The hinge assembly according to any one of claims 1 to 3, wherein the support structure comprises one metal part, a length direction of the metal part is consistent with a length direction of the resin matrix, and a length of the metal part is at least one half of a length of the resin matrix.

5. The hinge assembly according to any one of claims 1 to 3, wherein the support structure comprises a plurality of metal parts, and the plurality of metal parts are spaced apart from each other in a length direction of the resin matrix.

6. The hinge assembly according to claim 1, wherein a thickness of the support structure ranges from 0.1 mm to 5 mm.

7. The hinge assembly according to claim 1, wherein the support structure is an integrated structure formed through in-mold injection molding.

8. The hinge assembly according to claim 1, wherein a plurality of pits are provided on a surface of the metal part located in the resin matrix, and the resin matrix extends into the pits.

9. The hinge assembly according to claim 1, wherein a material of the metal part is aluminum, copper, gold, nickel, iron, or steel.

10. The hinge assembly according to claim 1, wherein a material of the resin matrix is polyetheretherketone, nylon, polytetrafluoroethylene, polyphenylene sulfide, or polyimide.

11. The hinge assembly according to claim 10, wherein a plurality of fibers are distributed in the resin matrix, and the fiber is a carbon fiber, a glass fiber, a ceramic fiber, a PBO fiber, or a Kevlar fiber.

12. A foldable display device, comprising a hinge assembly and a first structural part and a second structural part that are rotatably connected to the hinge assembly, wherein the hinge assembly is the hinge assembly according to any one of claims 1 to 11, and the first structural part and the second structural part are separately rotatably connected to the hinge via the support structure.
